# EUROPEAN PATENT APPLICATION

(11) **EP 2 605 526 A1**
(43) Date of publication of application: **19.06.2013**
(21) Application number: 11786116.1
(22) Date of filing: 03.06.2011
(51) Int. Cl.: H04N 21/2668

(54) **METHOD, APPARATUS AND SYSTEM FOR INSERTING ADVERTISEMENTS**

(30) Priority: 10.09.2010 CN 201010282724
(71) Applicant: Huawei Technologies Co., Ltd., Shenzhen, Guangdong 518129 (CN)
(72) Inventor: ZHAO, Yongxiang, Shenzhen Guangdong 518129 (CN); WANG, Jingyu, Shenzhen Guangdong 518129 (CN); AI, Wei, Shenzhen Guangdong 518129 (CN); WANG, Yan, Shenzhen Guangdong 518129 (CN)
(74) Representative: Pfenning, Meinig & Partner GbR
(86) International application number: PCT/CN2011/075234
(87) International publication number: WO 2011/147344

(57) **Abstract**

The embodiments of the present invention relate to communication technologies and disclose a method, a device, and a system for intercutting advertisements according to User Equipment (user terminal) information to improve user experience and effectiveness of advertisement intercutting. The method includes: receiving a service request sent by a user terminal and forwarded by a Radio Access Network (RAN) network element, and obtaining a service corresponding to the service request; obtaining user terminal information from the RAN network element; and determining a corresponding advertisement according to the user terminal information, and sending the obtained service and the determined advertisement to the user terminal through the RAN network element. The embodiments of the present invention are applicable to precise intercut of advertisements.

## Description

This application claims priority to Chinese Patent Application No. 201010282724.1, filed with the Chinese Patent Office on September 10, 2010 and entitled "METHOD, DEVICE AND SYSTEM FOR INTERCUTTING ADVERTISEMENTS", which is incorporated herein by reference in its entirety.

### FIELD OF THE INVENTION

The present invention relates to the field of communication, and in particular, to a method, a device, and a system for intercutting advertisements.

### BACKGROUND OF THE INVENTION

Because radio network spectrum resources are not available without pay, operators deploy networks smoothly, which evolve from a Universal Mobile Telecommunications System (UMTS) network to a High Speed Downlink Packet Access (HSDPA) network and to a Long Term Evolution (LTE) network step by step. In the deployment process of gradual evolution, it is important that the operator's network should meet service demands in a cost-efficient way in the smooth evolution. The advertisement intercutting service is an important means of reducing operation costs of the operator.

In the prior art, the method of intercutting an advertisement is: An advertisement intercutting device inserts an advertisement in a service response returned by a web application server, and sends the service response to a user terminal, which reduces the operation costs to some extent.

In the process of implementing the foregoing advertisement intercutting, the advertisement inserted by the advertisement intercutting device into the service response is poorly effective and compromises user experience.

### SUMMARY OF THE INVENTION

Embodiments of the present invention provides a method, a device, and a system for intercutting advertisements according to user terminal information to improve effectiveness of advertisement intercutting and user experience.

An embodiment of the present invention provides an advertisement intercutting method, which includes:
receiving a service request sent by a user terminal and forwarded by a Radio Access Network (RAN) network element, and obtaining a service corresponding to the service request;
obtaining user terminal information from the RAN network element; and
determining a corresponding advertisement according to the user terminal information, and sending the obtained service and the determined advertisement to the user terminal through the RAN network element.

Another embodiment of the present invention provides an advertisement intercutting device, which includes:
a receiving unit, configured to receive a service request sent by a user terminal and forwarded by an RAN network element;
a service obtaining unit, configured to obtain a service corresponding to the service request received by the receiving unit;
an information obtaining unit, configured to obtain user terminal information from the RAN network element;
a determining unit, configured to determine a corresponding advertisement according to the user terminal information obtained by the information obtaining unit; and
a sending unit, configured to send the service obtained by the service obtaining unit and the advertisement determined by the determining unit to the user terminal through the RAN network element.

Another embodiment of the present invention provides an advertisement intercutting system, including:
an RAN network element, configured to receive a service request message sent by a user terminal, forward the service request message to an advertisement intercutting device, and send user terminal information to the advertisement intercutting device; and
the advertisement intercutting device, configured to receive the service request sent by the user terminal and forwarded by the RAN network element, obtain a service corresponding to the service request, obtain the user terminal information from the RAN network element, determine a corresponding advertisement according to the user terminal information, and send the obtained service and the determined advertisement to the user terminal through the RAN network element.

After the technical solution of the present invention is applied, if an advertisement needs to be inserted into a service requested by the user terminal, the advertisement intercutting device obtains the corresponding service according to the service request sent by the RAN network element, obtains the user terminal information from the RAN network element, determines the corresponding advertisement according to the user terminal information, and sends the obtained service and the determined advertisement to the user terminal through the RAN network element. In this way, the corresponding advertisement is intercut according to the user terminal information, the advertisement intercutting is more effective, and the user experience is improved.

### BRIEF DESCRIPTION OF THE DRAWINGS

To illustrate the technical solution of the present invention or the prior art more clearly, the following outlines the accompanying drawings involved in description of the embodiments of the present invention or the prior art. Apparently, the accompanying drawings outlined below are illustrative rather than exhaustive, and persons of ordinary skill in the art can derive other drawings from the drawings without any creative effort.
FIG. 1 is a flowchart of an advertisement intercutting method on an advertisement intercutting device side according to an embodiment of the present invention;
FIG. 2 is a schematic diagram of relationships between advertisement intercutting network elements according to another embodiment of the present invention;
FIG. 3 is a schematic operation diagram of an advertisement intercutting method according to another embodiment of the present invention;
FIG. 4 is a composition block diagram of an advertisement intercutting device according to another embodiment of the present invention;
FIG. 5 is a composition block diagram of another advertisement intercutting device according to another embodiment of the present invention;
FIG. 6 is a composition block diagram of another advertisement intercutting device according to another embodiment of the present invention;
FIG. 7 is a composition block diagram of another advertisement intercutting device according to another embodiment of the present invention; and
FIG. 8 is a composition block diagram of an advertisement intercutting system according to another embodiment of the present invention.

### DETAILED DESCRIPTION OF THE EMBODIMENTS

The following detailed description is given in conjunction with the accompanying drawings to provide a thorough understanding of the present invention. It is obvious that the embodiments to be described are only a part rather than all of the embodiments of the present invention. All other embodiments, which can be derived by those skilled in the art from the embodiments given herein without any creative effort, shall fall within the protection scope of the present invention.

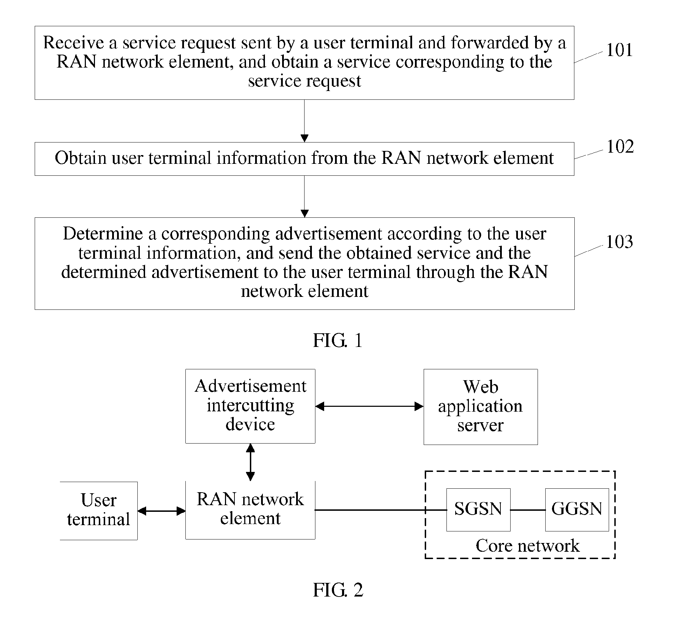

An embodiment of the present invention provides an advertisement intercutting method. As shown in FIG. 1, the method includes the following steps:
101. An advertisement intercutting device receives a service request sent by a user terminal and forwarded by an RAN network element, and obtains a service corresponding to the service request.
   The service request may be, but is not limited to, a HyperText Transfer Protocol (HTTP) service request, and may also be a service request of other protocol. This embodiment is applicable to various communication systems. For example, the RAN network element in a third generation (3G) network may be a NodeB or Radio Network Controller (RNC), and the RAN network element in an LTE network may be an evolved NodeB (eNodeB).
   For example, when the service is stored in a web application server, the advertisement intercutting device may obtain the service corresponding to the service request from the web application server. When the user needs to obtain the service, the user may send a service request through the user terminal, and the RAN network element forwards the service request sent by the user terminal to the advertisement intercutting device. The advertisement intercutting device obtains the service corresponding to the service request from the web application server. In this embodiment, the advertisement intercutting device may be connected to the RAN network element through a Gi interface. For example, the advertisement intercutting device may be moved into the RAN, and may communicate with the RAN network element through the Gi interface.
   The advertisement intercutting device may use the method in the prior art to obtain the service corresponding to the service request message from the web application server, which is not limited by the embodiment of the present invention. For example, the following method is applied: The advertisement intercutting device sends a service request to the web application server; after receiving the service request, the web application server obtains the service corresponding to the service request, and sends the obtained service to the advertisement intercutting device.
102. Obtain user terminal information from the RAN network element.
   Note that the advertisement intercutting device may obtain the user terminal information from the RAN network element after receiving the service request sent by the user terminal and forwarded by the RAN network element, or after obtaining the service corresponding to the service request, which is not limited by the embodiment of the present invention.
   The following is an exemplary method of obtaining the user terminal information from the RAN network element:
   sending an acquisition request message for obtaining user terminal information to the RAN network element, where the acquisition request message may carry a user terminal identifier (ID) of the user terminal; and receiving an acquisition response message returned by the RAN network element, where the acquisition response message carries the user terminal information corresponding to the user terminal ID and obtained according to the acquisition request message.

   The user terminal information may include: information about current location of the user terminal, subscription information of the user terminal, information about quality of the network currently covering the user terminal, or any combination thereof. The user terminal subscription information may include information about subscribed bandwidth of the user terminal, and/or information about priority of the user terminal.
103. Determine a corresponding advertisement according to the user terminal information, and send the obtained service and the determined advertisement to the user terminal through the RAN network element.

The advertisement intercutting device may determine the corresponding advertisement according to the information about current location of the user terminal, subscription information of the user terminal, information about quality of the network currently covering the user terminal, or any combination thereof.

If the obtained user terminal information is only the information about the current location of the user terminal, the step of determining the corresponding advertisement (namely, advertisement to be intercut) according to the information about current location of the user terminal may include: searching a preset table of mapping relationships between the user terminal location information and the advertisement according to the current location of the user terminal, and determining the advertisement corresponding to the current location of the user terminal.

If the obtained user terminal information is only the information about subscribed bandwidth in the user terminal subscription information, the step of determining the corresponding advertisement (namely, advertisement to be intercut) according to the user terminal subscription information may include: judging whether the subscribed bandwidth of the user terminal is greater than a first preset bandwidth threshold; if the subscribed bandwidth of the user terminal is greater than the first preset bandwidth threshold, determining that the corresponding advertisement is the advertisement which requires bandwidth greater than the first preset bandwidth threshold but less than the subscribed bandwidth of the user terminal; if the subscribed bandwidth of the user terminal is less than or equal to the first preset bandwidth threshold, determining that the corresponding advertisement is the advertisement which requires bandwidth less than or equal to the subscribed bandwidth of the user terminal. The first preset bandwidth threshold may be an empiric value designed to judge whether the subscribed bandwidth of the user terminal is large. The first preset bandwidth threshold is not limited in this embodiment, and may be set by the user according to specific conditions.

If the obtained user terminal information is only the information about quality of the network currently covering the user terminal, the step of determining the corresponding advertisement (namely, advertisement to be intercut) according to the information about quality of the network currently covering the user terminal may include: judging whether the quality of the network currently covering the user terminal is higher than a preset quality threshold; if the quality of the network currently covering the user terminal is higher than the preset quality threshold, determining that the corresponding advertisement is the advertisement which requires quality higher than the preset quality threshold but lower than the quality of the network currently covering the user terminal; if the quality of the network currently covering the user terminal is lower than or equal to the preset quality threshold, determining that the corresponding advertisement is the advertisement which requires quality less than or equal to the quality of the network currently covering the user terminal. The preset quality threshold may be an empiric value designed to judge the quality of the network currently covering the user terminal. The quality of the network may be reflected by network congestion. If the quality of the network currently covering the user terminal is higher than the preset quality threshold, it indicates that the network currently covering the user terminal suffers no congestion or little congestion. If the quality of the network currently covering the user terminal is lower than or equal to the preset quality threshold, it indicates that the network currently covering the user terminal suffers severe congestion.

When the advertisement to be intercut needs to be determined according to at least two types of user terminal information described above, the corresponding advertisement may be determined according to the foregoing description. For example, if the obtained user terminal information includes the information about the current location of the user terminal and the information about subscribed bandwidth of the user terminal, the step of determining the corresponding advertisement according to the user terminal information may include: First, searching a preset table of mapping relationships between the user terminal location and the advertisement according to the current location of the user terminal, and obtaining the advertisement that matches the current location of the user terminal, for example, obtaining advertisement 1 and advertisement 2 as the advertisements corresponding to the user terminal location information; judging whether the subscribed bandwidth of the user terminal is greater than a first preset bandwidth threshold; if the subscribed bandwidth of the user terminal is greater than the first preset bandwidth threshold, selecting advertisements which require bandwidth greater than the first preset bandwidth threshold but less than the subscribed bandwidth of the user terminal, for example, selecting advertisement 2 and advertisement 3 as the advertisements corresponding to the subscribed bandwidth of the user terminal, and determining advertisement 2 as the advertisement corresponding to the user terminal information; if the subscribed bandwidth of the user terminal is less than or equal to the first preset bandwidth threshold, selecting advertisements which require bandwidth less than or equal to the subscribed bandwidth of the user terminal, for example, selecting advertisement 1 and advertisement 4 as the advertisements corresponding to the subscribed bandwidth of the user terminal, and determining advertisement 1 as the advertisement corresponding to the user terminal information. When the user terminal information is other combinations of the three types of information above, see the description above, which is not repeated in the embodiment of the present invention.

In this embodiment, if an advertisement needs to be inserted into a service requested by the user terminal, the advertisement intercutting device obtains the corresponding service according to the service request sent by the RAN network element, obtains the user terminal information from the RAN network element, determines the corresponding advertisement according to the user terminal information, and sends the obtained service and the determined advertisement to the user terminal through the RAN network element. In this way, the corresponding advertisement is intercut according to the user terminal information, the advertisement intercutting is more effective, and the user experience is improved.

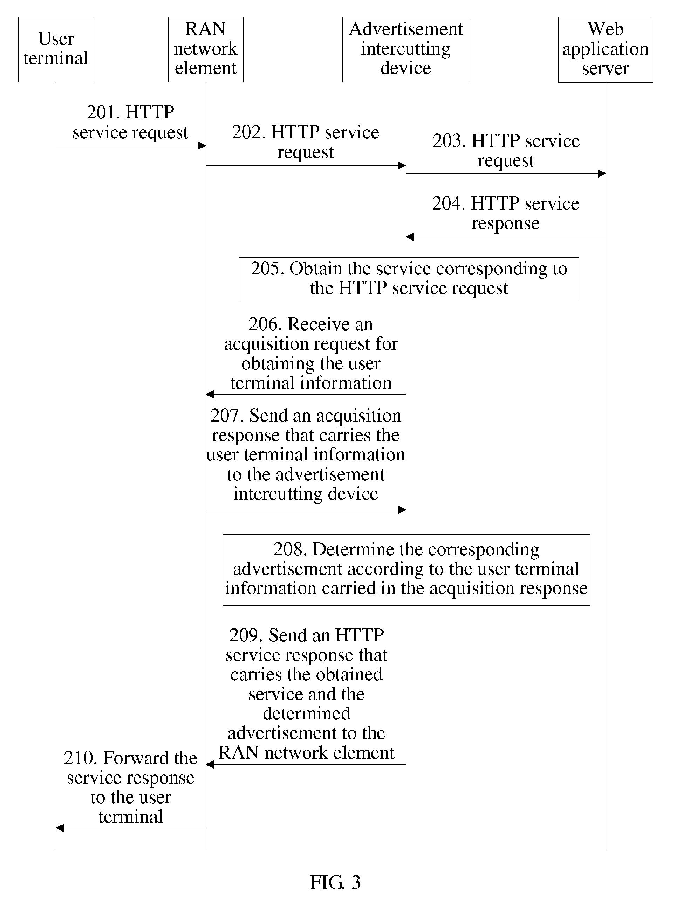

Another embodiment of the present invention provides an advertisement intercutting method. The method in this embodiment is described with reference to FIG. 2 and FIG. 3, assuming that the user sends an HTTP service request to the web application server to obtain an HTTP service. As shown in FIG. 2, the advertisement intercutting device is connected to the RAN network element and the web application server. For example, the advertisement intercutting device may be moved into the RAN, and may communicate with the RAN network element through a Gi interface. The user terminal may communicate with the core network through the RAN network element, or communicate with the advertisement intercutting device and the web application server through the RAN network element. As shown in FIG. 3, the method includes the following steps:
201. The user terminal sends an HTTP service request to the RAN network element.
202. The RAN network element receives the HTTP service request sent by the user terminal, and forwards the HTTP service request to the advertisement intercutting device.
203. After receiving the HTTP service request sent by the RAN network element, the advertisement intercutting device sends the HTTP service request to the web application server so as to obtain the service corresponding to the HTTP service request.
204. The web application server receives the HTTP service request, and obtains the service corresponding to the HTTP service request, and sends an HTTP service response that carries the service corresponding to the HTTP service request to the advertisement intercutting device.
205. After receiving the HTTP service response, the advertisement intercutting device parses the HTTP service response to obtain the service corresponding to the HTTP service request.
206. The advertisement intercutting device sends an acquisition request for obtaining user terminal information to the RAN network element, where the acquisition request carries a user terminal ID of the user terminal.
   The user terminal information may include: information about current location of the user terminal, subscription information of the user terminal, information about quality of the network currently covering the user terminal, or any combination thereof. The subscription information of the user terminal may include information about subscribed bandwidth of the user terminal and/or information about priority of the user terminal.
   When the advertisement intercutting device sends an acquisition request for obtaining user terminal information to the RAN network element, the advertisement intercutting device may request to obtain one or more types of information described above, which is not limited by the embodiment of the present invention.
207. The RAN network element receives the acquisition request, obtains the user terminal information corresponding to the user terminal ID, and sends an acquisition response that carries the user terminal information to the advertisement intercutting device.
208. The advertisement intercutting device receives the acquisition response sent by the RAN network element, and determines the corresponding advertisement according to the user terminal information carried in the acquisition response.
   The user terminal information may include: information about current location of the user terminal, subscription information of the user terminal, information about quality of the network currently covering the user terminal, or any combination thereof. When the advertisement intercutting device sends the acquisition request to the RAN network element, the advertisement intercutting device may request to obtain one or more types of information described above. The method of determining the corresponding advertisement according to the user terminal information may vary with the obtained information. For example, the method may include:
   If the acquisition response carries only the information about subscribed bandwidth in the user terminal subscription information, the step of determining the corresponding advertisement according to the subscribed bandwidth of the user terminal may include:
   judging whether the subscribed bandwidth of the user terminal is greater than a first preset bandwidth threshold; if the subscribed bandwidth of the user terminal is greater than the first preset bandwidth threshold, determining that the corresponding advertisement is the advertisement which requires bandwidth greater than the first preset bandwidth threshold but less than the subscribed bandwidth of the user terminal; if the subscribed bandwidth of the user terminal is less than or equal to the first preset bandwidth threshold, determining that the corresponding advertisement is the advertisement which requires bandwidth less than or equal to the first preset bandwidth threshold and less than the subscribed bandwidth of the user terminal.

   The first preset bandwidth threshold may be an empiric value designed to judge whether the subscribed bandwidth of the user terminal is large. The first preset bandwidth threshold is not limited in this embodiment, and may be set by the user according to specific conditions. Note that if the subscribed bandwidth of the user terminal is greater than the first preset bandwidth threshold, the bandwidth required by the determined advertisement should not be greater than the subscribed bandwidth of the user terminal so that the advertisement can be sent out smoothly, and received and played by the user terminal successfully. For example, if the user is a Very Important Person (VIP) user, the bandwidth subscribed for by the user is generally greater than the first preset bandwidth threshold. In this case, the selected corresponding advertisement may be an advertisement which requires bandwidth greater than the first preset bandwidth threshold but less than the subscribed bandwidth of the user terminal. If the user is an ordinary user, the bandwidth subscribed for by the user is generally less than or equal to the first preset bandwidth threshold. In this case, the selected corresponding advertisement may be an advertisement which requires bandwidth less than or equal to the subscribed bandwidth of the user terminal.
   If the acquisition response carries only the information about quality of the network currently covering the user terminal, the step of determining the corresponding advertisement according to the quality of the network currently covering the user terminal may include:
   judging whether the quality of the network currently covering the user terminal is higher than a preset quality threshold; if the quality of the network currently covering the user terminal is higher than the preset quality threshold, determining that the corresponding advertisement is the advertisement which requires quality higher than the preset quality threshold but lower than the quality of the network currently covering the user terminal; if the quality of the network currently covering the user terminal is lower than or equal to the preset quality threshold, determining that the corresponding advertisement is the advertisement which requires quality less than or equal to the quality of the network currently covering the user terminal.

   The preset quality threshold may be an empiric value designed to judge quality of the network currently covering the user terminal. The quality of the network may be reflected by network congestion. If the quality of the network currently covering the user terminal is higher than the preset quality threshold, it indicates that the network currently covering the user terminal suffers no congestion or little congestion. If the quality of the network currently covering the user terminal is lower than or equal to the preset quality threshold, it indicates that the network currently covering the user terminal suffers severe congestion. Note that if the quality of the network currently covering the user terminal is higher than the preset quality threshold, the quality required by the determined advertisement should not be higher than the quality of the network currently covering the user terminal so that the advertisement can be sent out smoothly, and received and played by the user terminal successfully. The quality requirement of the user terminal may be reflected by data traffic and transmission rate of data bearable on the user terminal, and the maximum quality requirement of the user terminal is the maximum data traffic and the maximum transmission rate of data bearable on the user terminal. For example, if the quality of the network currently covering the user terminal is higher than the preset quality threshold, it indicates that the network currently covering the user terminal suffers no congestion or little congestion, and, in this case, a large-traffic advertisement may be selected as the corresponding advertisement; if the quality of the network currently covering the user terminal is less than or equal to the preset quality threshold, it indicates that the network currently covering the user terminal suffers severe congestion, and, in this case, a small-traffic advertisement may be selected as the corresponding advertisement.
   If the acquisition response message carries only the information about current location of the user terminal, the step of determining the corresponding advertisement according to the current location of the user terminal may include: Searching a preset table of mapping relationships between the user terminal location and the advertisement according to the current location of the user terminal, and determining the advertisement corresponding to the current location of the user terminal. For example, if the user terminal is located in a shopping center, the corresponding advertisement is the discount information of the shopping center; if the user terminal is located in a residential community, the corresponding advertisement is the community activity information.
   If the acquisition response message carries at least two types of user terminal information described above, the corresponding advertisement may be obtained according to the foregoing description. For example, if the obtained user terminal information includes the information about the current location of the user terminal and the information about subscribed bandwidth of the user terminal, the step of determining the corresponding advertisement according to the user terminal information may include: First, searching a preset table of mapping relationships between the user terminal location and the advertisement according to the current location of the user terminal, and obtaining the advertisement that matches the current location of the user terminal, for example, obtaining advertisement 1 and advertisement 2 as the advertisements corresponding to the user terminal location information; judging whether the subscribed bandwidth of the user terminal is greater than a first preset bandwidth threshold; if the subscribed bandwidth of the user terminal is greater than the first preset bandwidth threshold, selecting advertisements which require bandwidth greater than the first preset bandwidth threshold but less than the subscribed bandwidth of the user terminal, for example, selecting advertisement 2 and advertisement 3 as the advertisements corresponding to the subscribed bandwidth of the user terminal, and determining advertisement 2 as the advertisement corresponding to the user terminal information; if the subscribed bandwidth of the user terminal is less than or equal to the first preset bandwidth threshold, selecting advertisements which require bandwidth less than or equal to the subscribed bandwidth of the user terminal, for example, selecting advertisement 1 and advertisement 4 as the advertisements corresponding to the subscribed bandwidth of the user terminal, and determining advertisement 1 as the advertisement corresponding to the user terminal information. When the user terminal information is other combinations of the three types of information above, see the description above, which is not repeated in the embodiment of the present invention.
209. Add the obtained service and the determined advertisement into an HTTP service response, and send the HTTP service response to the RAN network element so that the RAN network element sends the obtained service and the determined advertisement to the user terminal.
210. The RAN network element receives the HTTP service response sent by the advertisement intercutting device, and forwards the service response to the user terminal so as to display the obtained service and advertisement to the user.

In this embodiment, when an advertisement needs to be inserted into a service requested by the user terminal, the advertisement intercutting device obtains the corresponding service according to the service request forwarded by the RAN network element, obtains the user terminal information from the RAN network element, determines the corresponding advertisement according to the user terminal information, and sends the determined advertisement and the obtained service to the user terminal through the RAN network element. In this way, the corresponding advertisement is intercut according to the user terminal information, the advertisement intercutting is more effective, and the user experience is improved.

Moreover, in this embodiment, the advertisement intercutting device communicates with the RAN network element through the corresponding interface, which avoids the network element of the core network for forwarding the corresponding information to the advertisement intercutting device to implement communication, reduces network elements for forwarding the service, and saves the radio network resources.

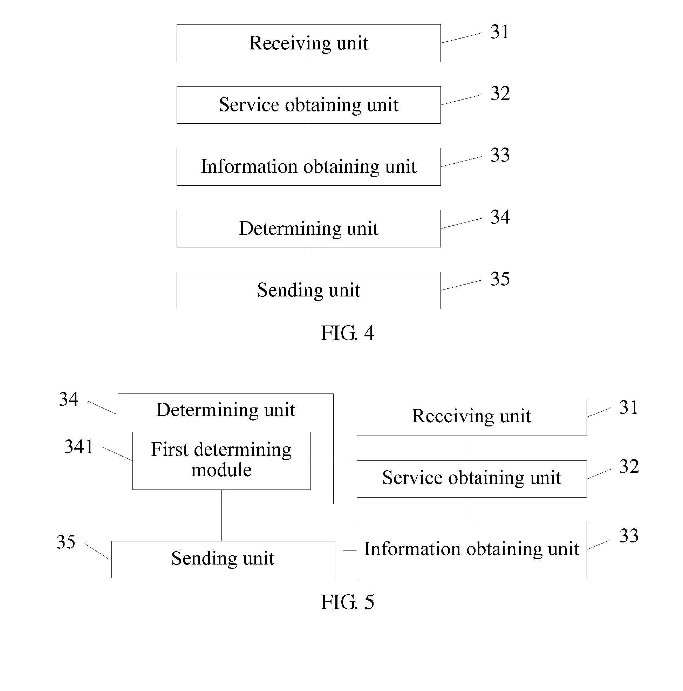

Another embodiment of the present invention provides an advertisement intercutting device. As shown in FIG. 4, the advertisement intercutting device includes: a receiving unit 31, a service obtaining unit 32, an information obtaining unit 33, a determining unit 34, and a sending unit 35.

The receiving unit 31 is configured to receive the service request sent by the user terminal and forwarded by the RAN network element, where the service request may be, but is not limited to, an HTTP service request and may also be a service request of other protocol, and the RAN network element in a 3G network may be a NodeB or RNC, and the RAN network element in an LTE network may be an eNodeB.

If the service is stored in a web application server, the advertisement intercutting device may obtain the service corresponding to the service request from the web application server. When the user needs to obtain the service from the web application server, the user may send a service request through the user terminal, and the RAN network element forwards the service request sent by the user terminal to the advertisement intercutting device. The advertisement intercutting device obtains the service corresponding to the service request from the web application server. In this embodiment, the advertisement intercutting device may be connected to the RAN network element. For example, the advertisement intercutting device may be moved into the RAN, and may communicate with the RAN network element through the Gi interface.

The service obtaining unit 32 is configured to obtain the service corresponding to the service request received by the receiving unit 31. The service obtaining unit 32 may use the method in the prior art to obtain the service corresponding to the service request, and the method of obtaining the service corresponding to the service request is not limited herein. For example, the method of obtaining the service corresponding to the service request includes the following step. The service obtaining unit 32 sends a service request to the web application server, and receives the service corresponding to the service request from the web application server.

The information obtaining unit 33 is configured to obtain user terminal information from the RAN network element. The user terminal information may include: information about current location of the user terminal, subscription information of the user terminal, information about quality of the network currently covering the user terminal, or any combination thereof. The user terminal subscription information may include information about subscribed bandwidth of the user terminal, and/or information about priority of the user terminal. The information obtaining unit 33 may obtain the user terminal information from the RAN network element in the following mode but without being limited to the following mode: sending an acquisition request for obtaining user terminal information to the RAN network element, where the acquisition request carries a user terminal ID of the user terminal; and receiving an acquisition response returned by the RAN network element, where the acquisition response carries the user terminal information corresponding to the user terminal ID and obtained by the RAN network element according to the acquisition request.

The determining unit 34 is configured to determine a corresponding advertisement according to the user terminal information obtained by the information obtaining unit 33. When the user terminal information includes information about current location of the user terminal, and/or subscription information of the user terminal, and/or information about quality of the network currently covering the user terminal, the determining unit 34 is further configured to determine the corresponding advertisement according to the current location of the user terminal, and/or subscription information of the user terminal, and/or information about quality of the network currently covering the user terminal, which is obtained by the information obtaining unit 33.

The sending unit 35 is configured to send the service obtained by the service obtaining unit 32 and the advertisement determined by the determining unit 34 to the user terminal through the RAN network element.

Further, if the acquisition response message carries the information about bandwidth subscribed for by the user terminal, as shown in FIG. 5, the determining unit 34 may include a first determining module 341.

When the determining unit 34 determines the corresponding advertisement according to the information about subscribed bandwidth of the user terminal which is obtained by the information obtaining unit 33, the first determining module 341 is configured to judge whether the subscribed bandwidth of the user terminal is greater than a first preset bandwidth threshold; if the subscribed bandwidth of the user terminal is greater than the first preset bandwidth threshold, the first determining module 341 determines that the corresponding advertisement is the advertisement which requires bandwidth greater than the first preset bandwidth threshold but less than the subscribed bandwidth of the user terminal; if the subscribed bandwidth of the user terminal is less than or equal to the first preset bandwidth threshold, the first determining module 341 is further configured to determine that the corresponding advertisement is the advertisement which requires bandwidth less than or equal to the subscribed bandwidth of the user terminal. The first preset bandwidth threshold is an empiric value designed to judge whether the subscribed bandwidth of the user terminal is large. The first preset bandwidth threshold is not limited in this embodiment, and may be set by the user according to specific conditions. Note that if the subscribed bandwidth of the user terminal is greater than the first preset bandwidth threshold, the bandwidth required by the determined advertisement should not be greater than the subscribed bandwidth of the user terminal so that the advertisement can be sent out smoothly, and received and played by the user terminal successfully. For example, if the user is a VIP user, the bandwidth subscribed for by the user is generally greater than the first preset bandwidth threshold. In this case, the selected corresponding advertisement may be an advertisement which requires bandwidth greater than the first preset bandwidth threshold but less than the subscribed bandwidth of the user terminal. If the user is an ordinary user, the bandwidth subscribed for by the user is generally less than or equal to the first preset bandwidth threshold. In this case, the selected corresponding advertisement may be an advertisement which requires bandwidth less than or equal to the subscribed bandwidth of the user terminal.

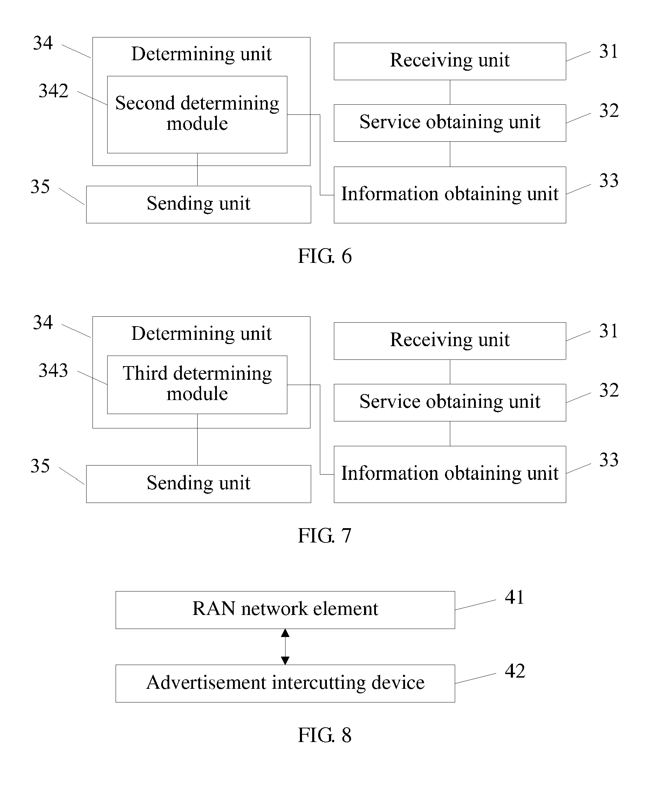

Further, if the acquisition response message carries the information about quality of the network currently covering the user terminal, as shown in FIG. 6, the determining unit 34 may include a second determining module 342.

When the determining unit 34 determines the corresponding advertisement according to the information about the quality of the network currently covering the user terminal, which is obtained by the information obtaining unit 33, the second determining module 342 is configured to judge whether the quality of the network currently covering the user terminal is higher than a preset quality threshold. If the quality of the network currently covering the user terminal is higher than the preset quality threshold, the second determining module 342 is configured to determine that the corresponding advertisement is the advertisement which requires the quality higher than the preset quality threshold but less than the quality of the network currently covering the user terminal. If the quality of the network currently covering the user terminal is less than or equal to the preset quality threshold, the second determining module 342 is further configured to determine that the corresponding advertisement is the advertisement which requires the quality less than or equal to the quality of the network currently covering the user terminal. The preset quality threshold is an empiric value designed to judge the quality of the network currently covering the user terminal. The quality of the network may be reflected by network congestion. If the quality of the network currently covering the user terminal is higher than the preset quality threshold, it indicates that the network currently covering the user terminal suffers no congestion or little congestion. If the quality of the network currently covering the user terminal is lower than or equal to the preset quality threshold, it indicates that the network currently covering the user terminal suffers severe congestion. Note that if the quality of the network currently covering the user terminal is higher than the preset quality threshold, the quality required by the determined advertisement should not be higher than the quality of the network currently covering the user terminal so that the advertisement can be sent out smoothly, and received and played by the user terminal successfully. The quality requirement of the user terminal may be reflected by data traffic and transmission rate of data bearable on the user terminal, and the maximum quality requirement of the user terminal is the maximum data traffic and the maximum transmission rate of data bearable on the user terminal. For example, if the quality of the network currently covering the user terminal is higher than the preset quality threshold, it indicates that the network currently covering the user terminal suffers no congestion or little congestion, and, in this case, a large-traffic advertisement may be selected as the corresponding advertisement; if the quality of the network currently covering the user terminal is less than or equal to the preset quality threshold, it indicates that the network currently covering the user terminal suffers severe congestion, and, in this case, a small-traffic advertisement may be selected as the corresponding advertisement.

Further, if the acquisition response message carries the information about current location of the user terminal, as shown in FIG. 7, the determining unit 34 may include a third determining module 343.

When the determining unit 34 determines the corresponding advertisement according to the information about the current location of the user terminal, which is obtained by the information obtaining unit 33, the setting module 343 is configured to search the preset table of mapping relationships between the user terminal location and the advertisement according to the current location of the user terminal, and determine the advertisement corresponding to the current location of the user terminal. For example, if the user terminal is located in a shopping center, the corresponding advertisement is the discount information of the shopping center; if the user terminal is located in a residential community, the corresponding advertisement is the community activity information.

Note that if the user terminal information obtained by the information obtaining unit 33 includes at least two types of the information described above, the determining unit 34 is configured to determine the corresponding advertisement according to the at least two types of information obtained by the information obtaining unit 33. For the detailed process, see the description about the embodiments shown in FIG. 1, FIG. 2, and FIG. 3, which is not repeated herein.

Another embodiment of the present invention provides an advertisement intercutting system. As shown in FIG. 8, the system includes an RAN network element 41 and an advertisement intercutting device 42.

The RAN network element 41 is configured to receive a service request message sent by a user terminal, forward the service request message to an advertisement intercutting device 42, and send user terminal information to the advertisement intercutting device 42.

The advertisement intercutting device 42 is configured to receive the service request sent by the user terminal and forwarded by the RAN network element 41, obtain a service corresponding to the service request, obtain the user terminal information from the RAN network element, determine a corresponding advertisement according to the user terminal information, and send the determined advertisement and the obtained service to the user terminal through the RAN network element 41.

For description about other functions of the RAN network element 41 and the advertisement intercutting device 42, see the corresponding part of the embodiments above, which is not repeated herein.

In this embodiment, if an advertisement needs to be inserted into a service requested by the user terminal, the advertisement intercutting device obtains the corresponding service according to the service request sent by the RAN network element, obtains the user terminal information from the RAN network element, determines the corresponding advertisement according to the user terminal information, and sends the obtained service and the determined advertisement to the user terminal through the RAN network element. In this way, the corresponding advertisement is intercut according to the user terminal information, the advertisement intercutting is more effective, and the user experience is improved.

Moreover, in this embodiment, the advertisement intercutting device may communicate with the RAN network element through the corresponding interface, which avoids the network element of the core network for forwarding the corresponding information to the advertisement intercutting device to implement communication, reduces network elements for forwarding the service, and saves the radio network resources.

Through the above description of the implementation, it is clear to persons skilled in the art that the present invention may be accomplished through software plus necessary universal hardware, or through hardware. But in many cases, the software implementation is preferred. Based on this, the above technical solutions or the part that makes contributions to the prior art can be substantially embodied in the form of a software product. The computer software product may be stored in a computer readable storage medium such as a floppy disk, a hard disk, or an optical disk, and contain several instructions to instruct computer equipment (for example, a personal computer, a server, or network equipment) to perform the method described in the embodiments of the present invention.

The above descriptions are merely exemplary embodiments of the present invention, but not intended to limit the scope of the present invention. Any modifications, variations or replacement that can be easily derived by those skilled in the art shall fall within the protection scope of the present invention. Therefore, the protection scope of the present invention is subject to the appended claims.

## Claims

1. An advertisement intercutting method, **characterized by** comprising:
receiving a service request sent by a user terminal and forwarded by a radio access network , RAN, network element, and obtaining a service corresponding to the service request;
obtaining user terminal information from the RAN network element; and
determining a corresponding advertisement according to the user terminal information, and sending the obtained service and the determined advertisement to the user terminal through the RAN network element.

2. The method according to claim 1, wherein:
the user terminal information comprises: information about current location of the user terminal, subscription information of the user terminal, information about quality of a network currently covering the user terminal, or any combination thereof; and
the determining of the corresponding advertisement according to the user terminal information comprises: determining the corresponding advertisement according to the information about current location of the user terminal, the subscription information of the user terminal, the information about quality of the network currently covering the user terminal, or any combination thereof.

3. The method according to claim 2, wherein:
if the subscription information of the user terminal comprises information about subscribed bandwidth of the user terminal, the step of determining the corresponding advertisement according to the subscription information of the user terminal comprises:
judging whether the subscribed bandwidth of the user terminal is greater than a first preset bandwidth threshold;
if the subscribed bandwidth of the user terminal is greater than the first preset bandwidth threshold, determining that the corresponding advertisement is an advertisement which requires bandwidth greater than the first preset bandwidth threshold but less than the subscribed bandwidth of the user terminal; and
if the subscribed bandwidth of the user terminal is less than or equal to the first preset bandwidth threshold, determining that the corresponding advertisement is an advertisement which requires bandwidth less than or equal to the subscribed bandwidth of the user terminal.

4. The method according to claim 2, wherein:
the determining of the corresponding advertisement according to the information about quality of the network currently covering the user terminal comprises:
judging whether the quality of the network currently covering the user terminal is higher than a preset quality threshold;
if the quality of the network currently covering the user terminal is higher than the preset quality threshold, determining that the corresponding advertisement is an advertisement which requires quality higher than the preset quality threshold but less than the quality of the network currently covering the user terminal; or
if the quality of the network currently covering the user terminal is less than or equal to the preset quality threshold, determining that the corresponding advertisement is an advertisement which requires quality less than or equal to the quality of the network currently covering the user terminal.

5. The method according to claim 2, wherein:
the determining of the corresponding advertisement according to the information about current location of the user terminal comprises:
searching a preset table of mapping relationships between the user terminal location and the advertisement according to the current location of the user terminal, and determining the advertisement corresponding to the current location of the user terminal.

6. An advertisement intercutting device, **characterized by** comprising:
a receiving unit, configured to receive a service request sent by a user terminal and forwarded by a radio access network, RAN, network element;
a service obtaining unit, configured to obtain a service corresponding to the service request received by the receiving unit;
an information obtaining unit, configured to obtain user terminal information from the RAN network element;
a determining unit, configured to determine a corresponding advertisement according to the user terminal information obtained by the information obtaining unit; and
a sending unit, configured to send the service obtained by the service obtaining unit and the advertisement determined by the determining unit to the user terminal through the RAN network element.

7. The device according to claim 6, wherein:
the user terminal information comprises: information about current location of the user terminal, subscription information of the user terminal, information about quality of a network currently covering the user terminal, or any combination thereof; and
the determining unit is further configured to determine the corresponding advertisement according to the information about current location of the user terminal, the subscription information of the user terminal, the information about quality of the network currently covering the user terminal, or any combination thereof.

8. The advertisement intercutting device according to claim 7, wherein:
if the subscription information of the user terminal comprises information about subscribed bandwidth of the user terminal, the determining unit comprises:
a first determining module, configured to judge whether the subscribed bandwidth of the user terminal is greater than a first preset bandwidth threshold;
if the subscribed bandwidth of the user terminal is greater than the first preset bandwidth threshold, the first determining module determines that the corresponding advertisement is an advertisement which requires bandwidth greater than the first preset bandwidth threshold but less than the subscribed bandwidth of the user terminal; and
if the subscribed bandwidth of the user terminal is less than or equal to the first preset bandwidth threshold, the first determining module determines that the corresponding advertisement is an advertisement which requires bandwidth less than or equal to the subscribed bandwidth of the user terminal.

9. The device according to claim 7, wherein:
if the determining unit determines the corresponding advertisement according to the information about quality of the network currently covering the user terminal, the determining unit comprises:
a second determining module, configured to: judge whether the quality of the network currently covering the user terminal is higher than a preset quality threshold;
if the quality of the network currently covering the user terminal is higher than the preset quality threshold, the second determining module determines that the corresponding advertisement is an advertisement which requires quality higher than the preset quality threshold but less than the quality of the network currently covering the user terminal; or
if the quality of the network currently covering the user terminal is less than or equal to the preset quality threshold, the second determining module determines that the corresponding advertisement is an advertisement which requires quality less than or equal to the quality of the network currently covering the user terminal.

10. The device according to claim 7, wherein:
if the determining unit determines the corresponding advertisement according to the information about current location of the user terminal, the determining unit comprises:
a third determining module, configured to search a preset table of mapping relationships between the user terminal location and the advertisement according to the current location of the user terminal, and determine the advertisement corresponding to the current location of the user terminal.

11. An advertisement intercutting system, comprising a radio access network, RAN, network element and the advertisement intercutting device according to any one of claims 6 to 10, wherein:
the RAN network element is configured to receive a service request sent by a user terminal, forward the service request to the advertisement intercutting device, and send user terminal information to the advertisement intercutting device.
